# EUROPÄISCHE PATENTSCHRIFT

(11) **EP 0 292 754 B1**
(45) Veröffentlichungstag und Bekanntmachung des Hinweises auf die Patenterteilung: **06.07.1994**
(21) Anmeldenummer: 88107261.5
(22) Anmeldetag: 06.05.1988
(51) Int. Cl.: F16L 23/00, F01N 7/08, F16L 13/02

(54) **Flansch zur Befestigung von Rohren**
Flange for fastening pipes
Bride pour attacher des tuyaux

(30) Priorität: 27.05.1987 DE 3717989
(43) Veröffentlichungstag der Anmeldung: 30.11.1988
(73) Patentinhaber: Erhardt Bischoff GmbH & Co. KG Fabrik für Kraftfahrzeugteile, D-73655 Plüderhausen (DE)
(72) Erfinder: Loup, Rudolf, D-7067 Plüderhausen (DE); Nording, Thomas, D-7300 Esslingen (DE)
(74) Vertreter: Patentanwälte Ruff, Beier, Schöndorf und Mütschele

(56) Entgegenhaltungen:
- DD-A- 92 829
- DE-C- 516 335

## Beschreibung

Die Erfindung betrifft ein Rohr mit einem Befestigungsflansch nach dem Oberbegriff des Anspruchs 1.

Es ist bisher üblich, Flansche zur Verbindung oder Befestigung von Rohren oder Baugruppen untereinander oder an Motorblöcken als massive Stanz-, Guß-, Schmiede- oder Fließpreßteile herzustellen. Aufgrund der verlangten Werkstückdicken und oft komplizierten Außenkonturen sind bestimmte Herstellverfahren in manchen Fällen von vornherein ausgeschlossen. Dazu kommen in den meisten Fällen aufwendige, spanabhebende Bearbeitungsvorgänge, so daß solche Flansche nur mit erheblichem technischem und finanziellem Aufwand hergestellt werden können.

Zur Verringerung der Herstellungskosten ist es bereits bekannt (EP-A1-178430), den Flansch aus mehreren, aus Blech ausgestanzten Platinen herzustellen, die zur Bildung eines Flansches miteinander verbunden werden.

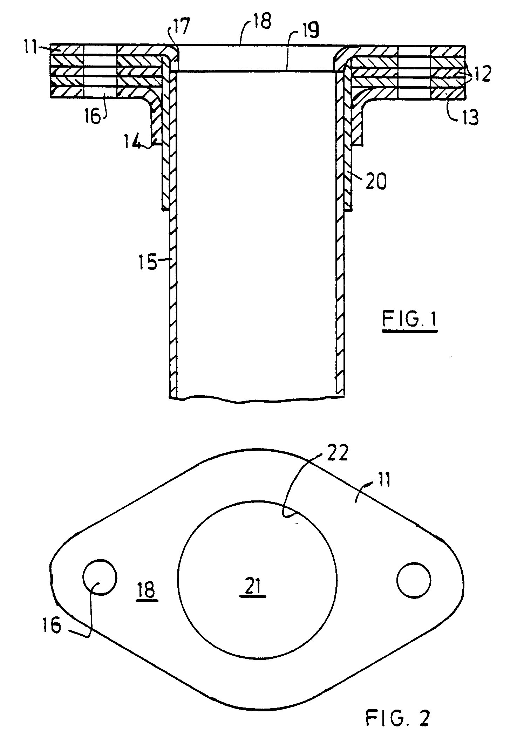

Bei einer Ausführungsform (Fig. 2) sind mit Ausnahme der Dichtplatine alle Platinen auf ein Rohrende aufgeschoben.

Dieses Rohrende ist stirnseitig auf die Dichtplatine aufgelötet. Die Platinen sind miteinander und mit dem Rohr verlötet oder verschweißt.

Ebenfalls bekannt ist ein Flansch (DE-A1-31 29 351), der parallel zu seiner Anlagefläche geteilt ist. Beide Flanschteile sind Guß- oder Schmiederohlinge, die miteinander verschweißt werden. Nach dem Verschweißen der beiden Flanschteile muß der überstehende Teil plangeschliffen werden. Anschließend kann dieser Flansch mit einem Rohrkrümmer verschweißt werden, wobei zur Aufnahme des Rohrkrümmers in dem Flansch dieser eine Zylindersenkung aufweist.

Ebenfalls bekannt ist es bei Apparaten aus hochlegiertem oder plattiertem Stahl (DD-A-92 829), einen Flansch aus plattiertem Stahlgrobblech an einem plattierten Stahlzylinder anzuschweißen. Weiterhin ist es hieraus bekannt, an einem Rohr einen Bund anzuschweißen und das Rohr dann mit einem Losflansch zu befestigen. Der Losflansch steht über den Bund radial über. Die Dicke des Losflansches ist so gewählt, daß dieser die für die Flanschverbindung erforderliche Biegefestigkeit aufweist. Mit diesem Flansch soll der Einsatz von hochlegiertem Stahl vermindert und das Erfordernis, den Flansch nachträglich zu plattieren, vermieden werden.

Der Erfindung liegt die Aufgabe zugrunde, eine Flanschverbindung zur Befestigung von Rohren zu schaffen, die sich rationell und wirtschaftlich fertigen läßt, eine hohe Festigkeit aufweist sowie weitere Verbesserungen ihrer Funktion ermöglicht.

Zur Lösung dieser Aufgabe schlägt die Erfindung ein Rohr mit den Merkmalen des Anspruchs 1 vor. Sowohl die Herstellung des Flansches als auch die Verbindung des Rohres mit dem Flansch erfolgt daher mit geringerem Aufwand. Dennoch erreicht der Flansch die zur Befestigung des Rohres erforderliche Festigkeit. Das zu verwendende Schweißverfahren kann nach den jeweiligen Erfordernissen ausgewählt werden. Insbesondere kann das Rohr mit der Dichtplatine stumpf verschweißt werden. Aufgrund der stumpfen Schweißung, die eine geringere Kerbwirkung aufweist, ergibt sich eine hohe Festigkeit.

Obwohl der Begriff Rohr verwendet wird, braucht es sich nicht um ein Rohr im engen Sinn zu handeln. Es soll darunter auch ein etwa rohrförmiger Teil einer Baugruppe verstanden werden, die beispielsweise aus Halbschalen zusammengesetzt ist.

In Weiterbildung kann vorgesehen sein, daß die Platinen aus unterschiedlichem Material bestehen. Dadurch können die einzelnen ausgestanzten Platinen für ihren jeweiligen Zweck optimal ausgebildet sein, so daß beispielsweise eine geringere Wärmeaufnahme oder sonstige fertigungstechnische, funktionelle und wirtschaftliche Vorteile erreicht werden können.

Durch die Verwendung unterschiedlicher Materialien für die verschiedenen Platinen kann ein Bimetalleffekt erreicht werden, der zu einer Verbesserung der Dichtfunktion des Flansches führt. Hat nämlich die Dichtung bzw. die Dichtungsplatine einen höheren thermischen Ausdehnungskoeffizienten als die dahinter angeordneten Platinen, und sind die Platinen untereinander so verbunden, daß Schubkräfte übertragen werden, so versucht der Flansch sich bei Erwärmüng zur Dichtung hin durchzubiegen und erhöht dadurch die Flächenpressung an der Dichtung.

Während beim Stand der Technik die Platinen miteinander verbunden sind, kann erfindungsgemäß vorgesehen sein, daß die Platinen lose aneinander anliegen. Ihre Verbindung zu einem festen Flansch erfolgt dann beim Anschrauben. Eine Verbindung der Platinen untereinander ist daher nicht mehr erforderlich, wenngleich aus Gründen der Handhabung vor dem Einbau eine gewisse gegenseitige Halterung gegeben sein sollte.

Erfindungsgemäß kann in Weiterbildung vorgesehen sein, daß der Rand des Lochs der letzten bzw. Dichtplatine nach innen um etwa 90° umgebogen ist, wobei das Rohr mit diesem Rand stumpf verschweißt ist. Dieser allseitig umgebogene Rand wird auch als Durchzug bezeichnet.

In Weiterbildung kann vorgesehen sein, daß das Rohr an dem Rand der Öffnungen der übrigen Platinen unbefestigt anliegt. Da das Rohr gasdicht mit der Dichtplatine verschweißt ist, braucht eine Verbindung zwischen dem zu befestigenden Rohr und den übrigen Platinen nicht gegeben zu sein, es reicht aus, wenn diese an der Außenseite des Rohrs direkt oder indirekt anliegen. So kann in Weiterbildung vorgesehen sein, daß um das zu befestigende Rohr herum eine Stützhülse angeordnet ist. Diese Stützhülse weist mit Vorteil eine größere axiale Länge auf als die Dicke der Platinen, so daß das zu befestigende Rohr über eine längere Strecke seitlich abgestützt ist.

Zur Unterstützung und Versteifung kann vorgesehen sein, daß eine der Platinen, vorzugsweise die der Dichtplatine gegenüberliegende Spannplatine einen Stützkragen aufweist. Dieser kann dadurch gebildet sein, daß der Rand der Öffnung umgebogen, beispielsweise tiefgezogen ist, und dadurch ein mehr oder weniger langer Ansatz gebildet ist, der das zu befestigende Rohr und/oder die Stützhülse an deren Außenseite abstützt.

Es kann vorgesehen sein, daß der Stützkragen mit der Stützhülse verschweißt ist. Die Stützhülse selbst kann, muß aber nicht, mit dem zu befestigenden Rohr verschweißt sein.

Der von der Erfindung vorgeschlagene Flansch eignet sich insbesondere zur Anbringung von Rohrkrümmern von Abgasanlagen, beispielsweise von Auspuffkrümmern an Motorblöcken oder von Leitungsteilen bei Auspuffanlagen.

Weitere Merkmale, Einzelheiten und Vorzüge der Erfindung ergeben sich aus der folgenden Beschreibung einer bevorzugten Ausführungsform der Erfindung sowie anhand der Zeichnung. Hierbei zeigen:
- Fig. 1: einen Längsschnitt durch einen Flansch mit einem Rohr;
- Fig. 2: eine Aufsicht auf die Anordnung der Fig. 1 von oben;
- Fig. 3: einen der Fig. 1 entsprechenden Längsschnitt bei einer zweiten Ausführungsform;
- Fig. 4: einen Querschnitt durch das Rohr der Fig. 3;
- Fig. 5: einen der Fig. 1 und 3 entsprechenden Schnitt durch eine dritte Ausführungsform;
- Fig. 6: eine Aufsicht auf die Spannplatine der Ausführungsform nach Fig. 5;
- Fig. 7: eine weitere Einzelheit in vergrößertem Maßstab.

Der in Fig. 1 dargestellte Flansch enthält insgesamt fünf Platinen, von denen die in Fig. 1 obere Platine 11 den Abschluß bildet und daher als letzte oder Dichtplatine bezeichnet wird. An ihr liegen drei weitere Platinen 12 an, die alle gleiche Form und Abmessungen aufweisen. Abgeschlossen wird das Paket aus Platinen von einer Spannplatine 13, die einen Stützkragen 14 bildet. An dem Flansch befestigt ist ein Rohr 15, beispielsweise ein Auspuffkrümmer. Während bei dem dargestellten Beispiel an dem Flansch nur ein Rohr 15 befestigt ist, und dementsprechend die Platinen 11 bis 13 jeweils ein dem Rohr 15 entsprechendes Loch aufweist, ist es selbstverständlich möglich, einen Flansch für mehr als ein Rohr 15 zu schaffen, beispielsweise mit zwei oder drei Rohren. In diesem Fall hätten die einzelnen Platinen eine größere Anzahl von Löchern.

Neben den Löchern für das Rohr 15 enthält jede Platine 11 bis 13 zwei weitere Löcher 16, die dazu dienen, das Paket aus Platinen mit Hilfe von Schrauben anzuschrauben, beispielsweise an einem Motorblock.

Die letzte bzw. Dichtplatine 11 ist im Bereich des Randes 17 ihres Lochs um etwa 90° nach unten abgebogen, d.h. von der Abschlußfläche 18 weg. Der umgebogene Rand 17 erstreckt sich nur etwa über die Dicke einer Platine 12 in axialer Richtung. Durch diese Umbiegung wird eine in einer Ebene liegende Kante 19 gebildet, an der das Rohr 15 mit seiner Endkante stumpf angeschweißt ist. Diese stumpfe Schweißung ergibt eine hohe mechanische Festigkeit.

An der Außenseite des Rohrs 15 ist eine Stützhülse 20 angeordnet, die das Rohr 15 ohne Zwischenraum umfaßt. Die Stützhülse 20 greift bis in die zentrale Öffnung der unmittelbar auf die Abschlußplatine 11 folgenden zweiten Platine 12 ein. Die axiale Erstreckung der Stützhülse 20 beträgt etwa das Dreifache der Dicke des Pakets aus den fünf Platinen 11 bis 13.

Die erste, d.h. der Dichtplatine 11 gegenüberliegende Spannplatine 13 ist im Randbereich ihrer zentralen Öffnung nach unten umgebogen und bildet dadurch den Stützkragen 14, dessen axiale Länge etwa der Dicke der fünf Platinen entspricht. Der Stützkragen 14 liegt ohne Abstand an der Außenseite der Stützhülse 20 an. Im dargestellten Ausführungsbeispiel ist der Stützkragen 14 mit der Stützhülse 20 durch eine Kehlnaht verschweißt.

Die Platinen 12 sind mit der Stützhülse 20 nicht verbunden. Untereinander können sie verbunden sein, dies ist jedoch nicht erforderlich. Seine in diesem Fall endgültige Festigkeit enthält der Flansch dadurch, daß er durch die Löcher 16 angeschraubt wird.

Fig. 2 zeigt nun die Aufsicht auf den Flansch der Fig. 1. Wie bereits erwähnt, enthält der Flansch ein zentrales Loch 21, das in Verlängerung des Rohres 15 angeordnet ist. Der Rand 22 des Lochs 21 ist abgerundet. Die beiden Befestigungslöcher 16 für die Schraubbefestigung des Flansches liegen diametral gegenüberliegend. Selbstverständlich sind auch andere Flanschformen und -Anordnungen ggf. auch mit mehreren Rohren 15 und unterschiedlicher Anzahl von Befestigungslöcher 16 möglich.

Der Flansch wird mit dem Rohr 15 in der in der Fig. 1 dargestellten zusammengesetzten Stellung verschweißt. Die Platinen 12 können aus unterschiedlichem Material sein, z.B. aus einer wärmeisolierenden Schicht, Asbest-Weichstoff, ggf. auch von einem Netz- oder Gittermaterial gebildet sein. Auch ein Lochblech ist möglich.

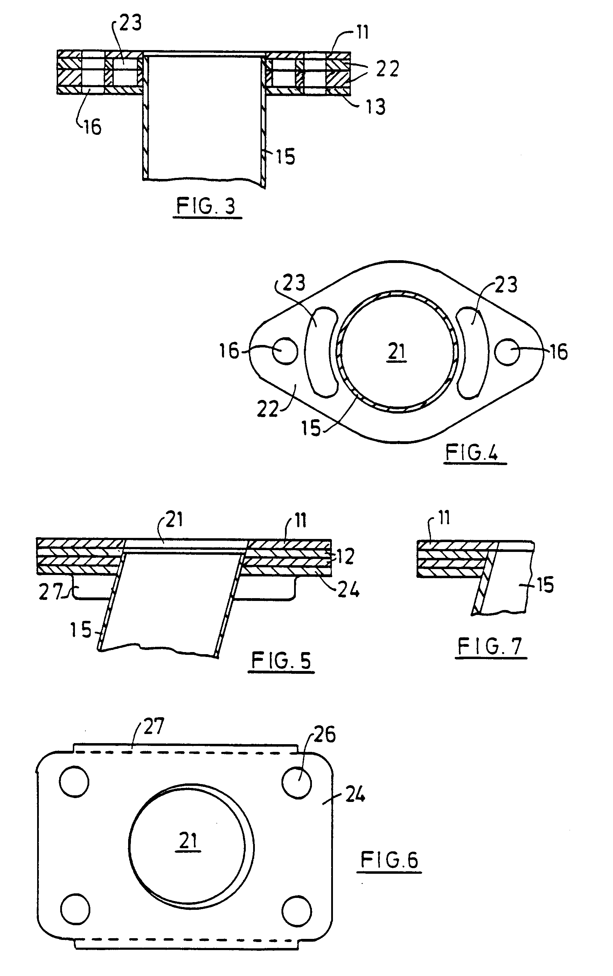

Bei der Ausführungsform der Fig. 3 ist das Rohr 15 mit der zur Anlage beispielsweise an einem Motorblock bestimmten Dichtplatine 11 mit Hilfe einer Kehlnaht verschweißt. Zwischen der Dichtplatine 11 und der zur Verspannung des Flansches an dem Motorblock dienenden Spannplatine 13 sind zwei Zwischenplatinen 22 angeordnet, die zusätzlich zu den Schraubenlöchern 16 zwei weitere Durchbrüche 23 aufweisen. Wie sich aus Fig. 4 ergibt, erstrecken sich diese Durchbrüche 23 etwa nierenförmig um den Rand des Rohres 15 bzw. der Öffnung 21 herum. Sie sind zwischen dem Rohr 15 und den Schraubenlöchern 16 angeordnet. Aufgrund dieser Durchbrüche 23 verringert sich das Gewicht der Zwischenplatinen 22 und damit des gesamten Flansches, ohne daß dadurch seine Festigkeit leidet.

Bei der in Fig. 5 und 6 dargestellten Ausführungsform verläuft das zu befestigende Rohr 15 unter einem von dem rechten Winkel abweichenden Winkel gegenüber der Ebene der Platinen. Demzufolge weisen die Platinen 11 bis 24 je eine mittlere Öffnung 21 auf, die etwas schräg verläuft, so daß die jeweilige Achse der Bohrung in Richtung der Achse des Rohres 15 verläuft. Die Stirnkante des Rohres ist mit Hilfe einer Kehlnaht an der unmittelbar auf die Dichtplatine 11 folgenden zweiten Platine 12 angeschweißt. Damit die Verbindung zwischen Rohr 15 und Flansch dennoch gasdicht ist, ist am Innenrand der Öffnung 21 die Dichtplatine 11 mit der anschließenden zweiten Platine 12 verschweißt.

Der Außenumfang der Platinen 11, 12 und 24 der Ausführungsform der Fig. 5 ist rechteckig, weicht also von der Form bei den Ausführungsformen nach Fig. 1 bis 4 ab. Dementsprechend sind Schraubenlöcher 26 zum Anschrauben des Flansches an einen Motorblock o.dgl. im Eckbereich der Platinen angeordnet, siehe Fig. 6. Die zum Anspannen des Flansches gedachte Spannplatine 24 weist im Bereich ihrer Längsseiten je einen Rand 27 auf, der um etwa 90° aus der Ebene der Platine 24 umgebogen ist. Dieser umgebogene Rand 27 dient zur Versteifung des Flansches. Er könnte auch in umgekehrter Richtung umgebogen oder auch an einer der anderen Platinen angebracht sein.

Die in vergrößertem Maßstab in Fig. 7 dargestellte Einzelheit ist eine geringe Abweichung der Fig. 5, wobei in diesem Fall das Rohr 15 stumpf an der Dichtplatine 11 angeschweißt ist und die folgenden Platinen 12, 24 jeweils eine um die Dicke des Rohres 15 in ihrem Radius größere Öffnung 21 aufweisen.

Während bei den dargestellten Ausführungsformen jeweils Rohre 15 befestigt wurden, ist es selbstverständlich auch möglich, beispielsweise eine Baugruppe an dem Flansch zu befestigen, die aus Halbschalen gebildet ist und einen ebenfalls aus Halbschalen zusammengesetzten, etwa rohrförmigen Ansatz aufweist, der im übrigen auch im Querschnitt nicht kreisrund zu sein braucht.

## Patentansprüche

1. Rohr mit einem Befestigungsflansch, insbesondere bei Abgasanlagen, der aus mindestens zwei Blechplatinen (11, 12, 13) zusammengesetzt ist, die mit Befestigungslöchern (16) versehen sind und je eine in Richtung des Rohrs (15) angeordnete Öffnung (21) zur Festlegung auf dem Rohr aufweisen, wobei eine der Platinen eine Dichtplatine (11) und eine der Platinen eine Spannplatine (13) ist, dadurch gekennzeichnet, daß das Rohr (15) nur mit einer der Platinen (11, 12, 13) direkt verbunden, insbesondere verschweißt ist.

2. Rohr nach Anspruch 1, dadurch gekennzeichnet, daß die Platinen (11, 12, 13) aus unterschiedlichem Material bestehen.

3. Rohr nach Anspruch 1 oder 2, dadurch gekennzeichnet, daß die Platinen (11, 12, 13) unterschiedliche Dicke aufweisen.

4. Rohr nach einem der vorhergehenden Ansprüche, dadurch gekennzeichnet, daß die Platinen (11, 12, 13) lose aneinander anliegen.

5. Rohr nach einem der vorhergehenden Ansprüche, dadurch gekennzeichnet, daß die den Abschluß bildende Dichtplatine (11) einen Durchzug aufweist und das Rohr (15) mit diesem Durchzug verschweißt ist.

6. Rohr nach einem der vorhergehenden Ansprüche, dadurch gekennzeichnet, daß das Rohr (15) an dem Rand der Öffnungen (21) der übrigen Platinen (12, 13) unbefestigt anliegt.

7. Rohr nach einem der vorhergehenden Ansprüche, dadurch gekennzeichnet, daß um das Rohr (15) herum zwischen diesem und den Öffnungen (21) der Platinen (12, 13) eine Stützhülse (20) angeordnet ist.

8. Rohr nach einem der vorhergehenden Ansprüche, dadurch gekennzeichnet, daß die Spannplatine (13) einen mindestens teilweise ausgebildeten Stützkragen (14) aufweist.

9. Rohr nach Anspruch 7 oder 8, dadurch gekennzeichnet, daß die Stützhülse (20) das Rohr (15) ohne Abstand umgibt.

10. Rohr nach Anspruch 8 oder 9, dadurch gekennzeichnet, daß der Stützkragen (14) das Rohr (15) oder die Stützhülse (21) ohne Abstand umgibt.

11. Rohr nach einem der Ansprüche 8 bis 10, dadurch gekennzeichnet, daß der Stützkragen (14) mit der Stützhülse (20) verschweißt ist.

12. Rohr nach einem der vorhergehenden Ansprüche, dadurch gekennzeichnet, daß das zu befestigende Rohr (15) und die Achse der Öffnungen (21) unter einem von dem rechten Winkel abweichenden Winkel gegenüber der Ebene des Flansches verlaufen.

13. Rohr nach einem der vorhergehenden Ansprüche, dadurch gekennzeichnet, daß eine der Platinen (12, 13), vorzugsweise die Spannplatine (13), einen aus ihrer Ebene um vorzugsweise etwa 90° abgebogenen Rand (27) aufweist.

14. Rohr nach einem der vorhergehenden Ansprüche, dadurch gekennzeichnet, daß mindestens eine der Zwischenplatinen (22) einen oder mehrere Durchbrüche (23) aufweist.

15. Rohr nach einem der vorhergehenden Ansprüche, dadurch gekennzeichnet, daß zwischen der Dichtplatine (11) und der nächstfolgenden Platine (12) eine wärmeisolierende Schicht angeordnet ist.

## Claims

1. Pipe with a fixing flange, particularly in exhaust systems and which comprises at least two sheet metal blanks (11, 12, 13), which are provided with fixing holes (16) and in each case have an opening (21) located in the direction of the pipe (15) for fixing to the latter, one of the blanks being a sealing blank (11) and another of the blanks being a clamping blank (13), characterized in that the pipe (15) is only directly connected and in particular welded to one of the blanks (11, 12, 13).

2. Pipe according to claim 1, characterized in that the blanks (11, 12, 13) are made from different materials.

3. Pipe according to claim 1 or 2, characterized in that the blanks (11, 12, 13) have different thicknesses.

4. Pipe according to one of the preceding claims, characterized in that the blanks (11, 12, 13) engage loosely on one another.

5. Pipe according to one of the preceding claims, characterized in that the sealing plate (11) forming the termination has an all-round, bent-over edge and the pipe (15) is welded thereto.

6. Pipe according to one of the preceding claims, characterized in that the pipe (15) engages in unfixed form on the edge of the openings (21) of the remaining blanks (12, 13).

7. Pipe according to one of the preceding claims, characterized in that a support sleeve (20) is placed around the pipe (15) between the latter and the openings (21) of the blanks (12, 13).

8. Pipe according to one of the preceding claims, characterized in that the clamping blank (13) has an at least partly formed support collar (14).

9. Pipe according to claim 7 or 8, characterized in that the support sleeve (20) surrounds in unspaced manner the pipe (15).

10. Pipe according to claim 8 or 9, characterized in that the support collar (14) surrounds in unspaced manner the pipe (15) or the support sleeve (21).

11. Pipe according to one of the claims 8 to 10, characterized in that the support collar (14) is welded to the support sleeve (20).

12. Pipe according to one of the preceding claims, characterized in that the pipe (15) to be fixed and the axis of the openings (21) are at an angle differing from a right angle with respect to the flange plane.

13. Pipe according to one of the preceding claims, characterized in that one of the blanks (12, 13), preferably the clamping blank (13), has an edge (27) bent from its plane, preferably by approximately 90°.

14. Pipe according to one of the preceding claims, characterized in that at least one of the intermediate blanks (22) has one or more openings (23).

15. Pipe according to one of the preceding claims, characterized in that a thermally insulating layer is placed between the sealing blank (11) and the following blank (12).

## Revendications

1. Tuyau avec bride de fixation, notamment pour tuyauteries d'échappement, qui se compose d'au moins deux platines en tôle (11, 12, 13) munies de trous de fixation (16) et présentant chacune une ouverture (21) disposée en direction du tuyau (15) pour les fixer au tuyau, sachant que l'une des platines est une platine d'étanchéité (11) et l'autre platine une platine de serrage (13), caractérisé en ce que le tuyau (15) n'est relié directement, notamment soudé, qu'à l'une des platines (11, 12, 13).

2. Tuyau selon la revendication 1, caractérisé en ce que les platines (11, 12, 13) sont composées de différents matériaux.

3. Tuyau selon la revendication 1 ou 2, caractérisé en ce que les platines (11, 12, 13) présentent différentes épaisseurs.

4. Tuyau selon l'une des revendications précédentes, caractérisé en ce que les platines (11, 12, 13) sont appliquées librement les unes contre les autres.

5. Tuyau selon l'une des revendications précédentes, caractérisé en ce que la platine d'étanchéité (11) formant la fermeture présente un passage et en ce que le tuyau (15) est soudé à ce passage.

6. Tuyau selon l'une des revendications précédentes, caractérisé en ce que le tuyau (15) est appliqué contre le bord des ouvertures (21) des autres platines (12, 13) sans y être fixé.

7. Tuyau selon l'une des revendications précédentes, caractérisé en ce qu'une douille d'appui (20) est disposée autour du tuyau (15), entre celui-ci et les ouvertures (21) des platines (12, 13).

8. Tuyau selon l'une des revendications précédentes, caractérisé en ce que la platine de serrage (13) présente un collet d'appui (14) réalisé au moins partiellement.

9. Tuyau selon la revendication 7 ou 8, caractérisé en ce que la douille d'appui (20) entoure le tuyau (15) sans jeu.

10. Tuyau selon la revendication 8 ou 9, caractérisé en ce que le collet d'appui (14) entoure le tuyau (15) ou la douille d'appui (20) sans jeu.

11. Tuyau selon l'une des revendications 8 à 10, caractérisé en ce que le collet d'appui (14) est soudé à la douille d'appui (20).

12. Tuyau selon l'une des revendications précédentes, caractérisé en ce que le tuyau (15) à fixer et l'axe des ouvertures (21) s'étendent avec un angle s'écartant de l'angle droit par rapport au plan de la bride.

13. Tuyau selon l'une des revendications précédentes, caractérisé en ce que l'une des platines (12, 13), de préférence la platine de serrage (13), présente un bord (27) recourbé, de préférence, d'environ 90° par rapport au plan de la platine.

14. Tuyau selon l'une des revendications précédentes, caractérisé en ce qu'au moins l'une des platines intermédiaires (22) présente un ou plusieurs passages (23).

15. Tuyau selon l'une des revendications précédentes, caractérisé en ce qu'une couche calorifuge est disposée entre la platine d'étanchéité (11) et la platine suivante (12).
